# FASCICULE DE BREVET EUROPEEN

(11) **EP 2 697 093 B1**
(45) Date de publication et mention de la délivrance du brevet: **24.01.2018**
(21) Numéro de dépôt: 12715324.5
(22) Date de dépôt: 22.03.2012
(51) Int. Cl.: B60K 35/00

(54) **DISPOSITIF D'AFFICHAGE AVEC UN ECRAN TACTILE ET PROCEDE DE FABRICATION**
ANZEIGEVORRICHTUNG MIT TAKTILEM BILDSCHIRM UND HERSTELLUNGSVERFAHREN
DISPLAY DEVICE WITH A TACTILE SCREEN AND METHOD OF MANUFACTURE

(30) Priorité: 14.04.2011 DE 102011017006; 28.06.2011 FR 1102000
(43) Date de publication de la demande: 19.02.2014
(73) Titulaire: Johnson Controls Automotive Electronics SAS, 95892 Cergy-Pontoise Cedex (FR)
(72) Inventeur: GUILLAUMINAUD, Frédéric, F-95800 Cergy Le Haut (FR)
(74) Mandataire: Schwöbel, Thilo K.
(86) Numéro de dépôt international: PCT/EP2012/001258
(87) Numéro de publication internationale: WO 2012/139704

(56) Documents cités:
- FR-A1- 2 954 535
- US-A1- 2009 257 189

## Description

La présente invention concerne un dispositif d'affichage, notamment pour véhicule automobile, avec un écran tactile et un procédé de fabrication d'un dispositif d'affichage.

Des dispositifs d'affichage avec des écrans tactiles, notamment pour des véhicules automobiles, sont généralement connus.

Le document US2009/257189 A1 divulgue le préambule de la revendication 1. Souvent, de tels dispositifs d'affichage comprennent un élément de boîtier par rapport auquel l'écran tactile est positionné ce que rend difficile l'assemblage, et notamment le positionnement de l'écran tactile par rapport à un élément d'affichage.

La présente invention a notamment pour but de pallier aux inconvénients de l'art connu, et notamment ceux cités ci-dessus, et a également pour but de proposer un dispositif d'affichage ainsi qu'un procédé de fabrication d'un dispositif d'affichage tels
-- que le positionnement de l'écran tactile par rapport au élément d'affichage peut être réalisé de manière simple et efficace, et
-- qu'une grande stabilité du dispositif d'affichage est assurée.

Suivant l'invention, ce but est atteint par un dispositif d'affichage, notamment pour véhicule automobile, comprenant
-- un écran tactile, et
-- un élément d'affichage,
l'écran tactile ayant un premier plan d'extension principale,
l'élément d'affichage ayant un deuxième plan d'extension principale,
le premier plan d'extension principale et le deuxième plan d'extension principale étant parallèles,
caractérisé en ce que l'écran tactile et l'élément d'affichage sont positionnés l'un par rapport à l'autre par l'intermédiaire d'un élément de cadre, et que
-- le procédé de fabrication comprend une étape pendant laquelle, après le positionnement de l'écran tactile et de l'élément d'affichage par rapport à l'élément de cadre, un élément de joint est positionné, au moins partiellement, entre l'écran tactile et l'élément de cadre par l'intermédiaire d'une étape de moulage.

Avec un tel dispositif d'affichage, il est avantageusement possible de facilement positionner l'écran tactile par rapport à l'élément d'affichage avec une très grand précision de positionnement.

Selon un mode de réalisation préféré de la présente invention, il est prévu que le dispositif d'affichage comprend un élément de boîtier, et que
-- l'écran tactile,
-- l'élément d'affichage, et
-- l'élément de boîtier
sont positionnés l'un par rapport à l'autre par l'intermédiaire de l'élément de cadre.

Un perfectionnement préféré de l'invention réside encore dans le fait que l'élément de joint est positionné, au moins partiellement,
-- entre l'écran tactile et l'élément de cadre et
-- entre l'écran tactile et l'élément de boîtier.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
la figure 1 est une vue schématique d'explosion d'un dispositif d'affichage selon la présente invention, et
la figure 2 est une vue schématique agrandie d'une partie du dispositif d'affichage selon la présente invention.

### DESCRIPTION DES DESSINS

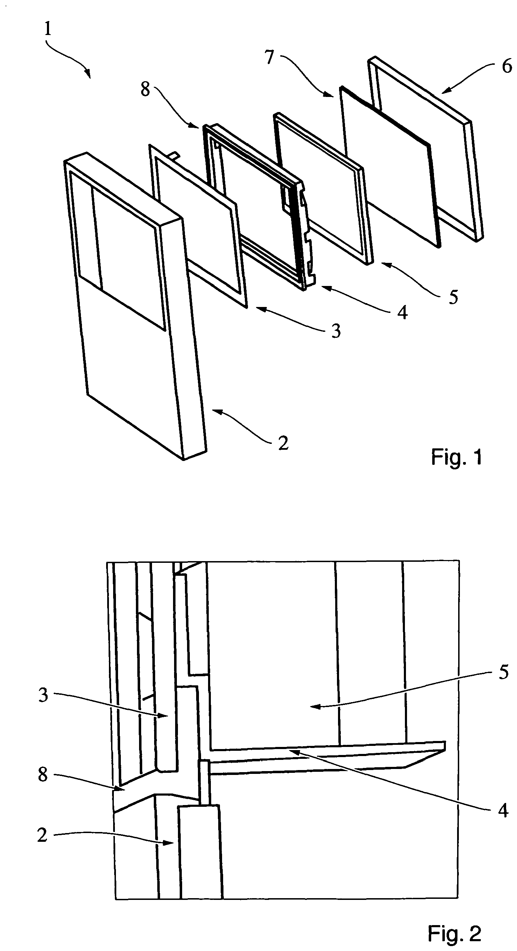

Comme le montrent les figures 1 et 2 des dessins annexés, un dispositif d'affichage 1 selon la présente invention comprend un écran tactile 3 et un élément d'affichage 5. L'écran tactile 3 peut comprendre un élément optique, par exemple pour focaliser de la lumière.

Entre l'écran tactile 3 et l'élément d'affichage 5, un élément de cadre 4 est positionné. L'élément de cadre 4 est notamment réalisé dans un matériau métallique, par exemple en acier. L'élément de cadre 4 a notamment une forme adaptée à la forme de l'écran tactile 3 et l'élément d'affichage 5, par exemple rectangulaire. L'élément de cadre 4 peut être réalisé en tôle, notamment en tôle d'acier.

L'écran tactile 3 a un premier plan d'extension principale, et l'élément d'affichage 5 a un deuxième plan d'extension principale, les plans d'extension principale étant parallèles. L'écran tactile 3 et l'élément d'affichage 5 sont positionnés l'un par rapport à l'autre par l'intermédiaire de l'élément de cadre 4. L'élément de cadre 4 comprend une première surface de contact avec l'écran tactile 3 et une deuxième surface de contact avec l'élément d'affichage 5. De préférence, les première et deuxième surfaces de contact sont localisés de côtés opposés de l'élément de cadre 4.

Le procédé de fabrication selon la présente invention comprend une étape pendant laquelle, après le positionnement de l'écran tactile 3 et de l'élément d'affichage 5 par rapport à l'élément de cadre 4, l'élément de joint 8 est positionné, au moins partiellement, entre l'écran tactile 3 et l'élément de cadre 4 par l'intermédiaire d'une étape de moulage.

Le dispositif d'affichage 1 selon la présente invention comprend par ailleurs une carte imprimée 7, un couvercle 6, ainsi qu'un élément de boîtier 2.

L'élément de boîtier 2 est orienté vers un utilisateur du dispositif d'affichage 1. L'élément de boîtier 2 comprend un évidement tel que l'utilisateur a accès à l'écran tactile 3 pour actionner l'écran tactile 3. Il est préféré selon la présente invention que l'élément de boîtier 2 et l'écran tactile 3 ne sont pas en contact direct mais par l'intermédiaire d'un élément de joint 8.

L'élément de joint 8 est notamment positionnée par moulage. Le matériau de l'élément de joint 8 est notamment un matériau élastique ce qui a l'avantage que des variations de l'expansion thermique entre, d'une part, l'élément de boîtier 2 et, d'autre part, l'écran tactile 3 et/ou l'élément d'affichage 5 peuvent être facilement compensées de telle sorte que les forces (notamment liées aux variations d'expansion thermique) entre notamment l'élément de boîtier 2 et l'écran tactile peuvent être réduits.

## Revendications

1. Procédé de fabrication d'un dispositif d'affichage (1), notamment pour un véhicule automobile, comprenant
-- un écran tactile (3), et
-- un élément d'affichage (5),
l'écran tactile (3) ayant un premier plan d'extension principale,
l'élément d'affichage (5) ayant un deuxième plan d'extension principale,
le premier plan d'extension principale et le deuxième plan d'extension principale étant parallèles, **caractérisé en ce que**
-- l'écran tactile (3) et l'élément d'affichage (5) sont positionnés l'un par rapport à l'autre par l'intermédiaire d'un élément de cadre (4), et que
-- le procédé de fabrication comprend une étape pendant laquelle, après le positionnement de l'écran tactile (3) et de l'élément d'affichage (5) par rapport à l'élément de cadre (4), un élément de joint (8) est positionné, au moins partiellement, entre l'écran tactile (3) et l'élément de cadre (4) par l'intermédiaire d'une étape de moulage.

2. Procédé de fabrication selon la revendication 1, **caractérisé en ce que** le dispositif d'affichage (1) comprend un élément de boîtier (2), et que
-- l'écran tactile (3),
-- l'élément d'affichage (5), et
-- l'élément de boîtier (2)
sont positionnés l'un par rapport à l'autre par l'intermédiaire de l'élément de cadre (4).

3. Procédé de fabrication selon la revendication 1 ou 2, **caractérisé en ce que** l'élément de joint (8) est positionné, au moins partiellement,
-- entre l'écran tactile (3) et l'élément de cadre (4) et
-- entre l'écran tactile (3) et l'élément de boîtier (2).

## Patentansprüche

1. Herstellungsverfahren für eine Anzeigevorrichtung (1), insbesondere für ein Kraftfahrzeug, umfassend:
- einen taktilen Bildschirm (3) und
- ein Anzeigeelement (5),
wobei der taktile Bildschirm (3) eine erste Hauptausdehnungsebene aufweist, das Anzeigeelement (5) eine zweite Hauptausdehnungsebene aufweist, wobei die erste Hauptausdehnungsebene und die zweite Hauptausdehnungsebene parallel sind, **dadurch gekennzeichnet, dass**
- der taktile Bildschirm (3) und das Anzeigeelement (5) über ein Rahmenelement (4) relativ zueinander positioniert sind und
- der Herstellungsprozess einen Schritt umfasst, während dessen nach der Positionierung des taktilen Bildschirms (3) und des Anzeigeelements (5) relativ zum Rahmenelement (4) ein Dichtungselement (8) über einen Formungsschritt wenigstens teilweise zwischen dem taktilen Bildschirm (3) und dem Rahmenelement (4) positioniert wird.

2. Herstellungsverfahren nach Anspruch 1, **dadurch gekennzeichnet, dass** das Anzeigeelement (1) ein Gehäuseelement (2) umfasst und dass
- der taktile Bildschirm (3),
- das Anzeigeelement (5) und
- das Gehäuseelement (2)
über das Rahmenelement (4) relativ zueinander positioniert werden.

3. Herstellungsverfahren nach Anspruch 1 oder 2, **dadurch gekennzeichnet, dass** das Dichtungselement (8) wenigstens teilweise
- zwischen dem taktilen Bildschirm (3) und dem Rahmenelement (4) und
- zwischen dem taktilen Bildschirm (3) und dem Gehäuseelement (2)
positioniert wird.

## Claims

1. Method for manufacturing a display device (1), in particular for an automotive vehicle, comprising
- a touchscreen (3); and
- a display element (5),
the touchscreen (3) having a first main extension plane,
the display element (5) having a second main extension plane,
the first main extension plane and the second main extension plane being parallel, **characterized in that**
- the touchscreen (3) and the display element (5) are positioned with respect to one another by means of a frame element (4); and **in that**
- the manufacturing method comprises a step in which, after positioning the touchscreen (3) and the display element (5) with respect to the frame element (4), a seal element (8) is positioned, at least partially, between the touchscreen (3) and the frame element (4) by means of a moulding step.

2. Manufacturing method according to Claim 1, **characterized in that** the display device (1) comprises a case element (2), and **in that**
- the touchscreen (3);
- the display element (5); and
- the case element (2)
are positioned with respect to one another by means of the frame element (4).

3. Manufacturing method according to Claim 1 or 2, **characterized in that** the seal element (8) is positioned, at least partially,
- between the touchscreen (3) and the frame element (4); and
- between the touchscreen (3) and the case element (2).
